# EUROPEAN PATENT APPLICATION

(11) **EP 3 809 249 A1**
(43) Date of publication of application: **21.04.2021**
(21) Application number: 19823056.7
(22) Date of filing: 02.04.2019
(51) Int. Cl.: G06F 3/0481, G06T 3/00

(54) **INFORMATION PROCESSING DEVICE, INFORMATION PROCESSING METHOD, AND PROGRAM**

(30) Priority: 18.06.2018 JP 2018115140
(71) Applicant: Sony Corporation, 108-0075 Tokyo (JP)
(72) Inventor: OTSUKA, Junji, Tokyo 108-0075 (JP); HANDA, Masaki, Tokyo 108-0075 (JP); GOTOH, Kenji, Tokyo 108-0075 (JP); IKEDA, Tetsuo, Tokyo 108-0075 (JP); FUJINAWA, Eisuke, Tokyo 108-0075 (JP); YOSHITOMI, Kosuke, Tokyo 108-0075 (JP); MIYAZAWA, Katsuji, Tokyo 108-0075 (JP); WATANABE, Shoji, Tokyo 108-0075 (JP)
(74) Representative: 2SPL Patentanwälte PartG mbB
(86) International application number: PCT/JP2019/014643
(87) International publication number: WO 2019/244437

(57) **Abstract**

An information processing device includes a controller that detects at least two candidate points positioned in a detected operation direction, switches the candidate points such that a predetermined candidate point is selected from the at least two candidate points, and displays at least the selected candidate point.

## Description

### [Technical field]

The present disclosure relates to an information processing device, an information processing method, and a program.

### [Background Art]

Conventionally, a device that displays a point indicated by a user has been proposed (refer to PTL 1, for example).

### [Citation List]

### [Patent Literature]

[PTL 1]
JP 5614014 B

### [Summary]

### [Technical Problem]

In the device disclosed in PTL 1, it is assumed that the surface of an object positioned in a direction indicated by a user is a point indicated by the user. Accordingly, there is concern about a point that the user wants to indicate is limited and inconsistency of the position of an indication point and an actual display position.

An object of the present disclosure is to provide an information processing device, an information processing method, and a program capable of presenting candidates for points that a user wants to indicate (hereinafter appropriately referred to as candidate points), which are positioned in an operation direction of the user.

### [Solution to Problem]

The present disclosure is, for example, an information processing device including a controller that detects at least two candidate points positioned in a detected operation direction, switches the candidate points such that a predetermined candidate point is selected from the at least two candidate points, and displays at least the selected candidate point.

In addition, the present disclosure is, for example, an information processing method, using a controller, including detecting at least two candidate points positioned in a detected operation direction, switching the candidate points such that a predetermined candidate point is selected from the at least two candidate points, and displaying at least the selected candidate point.

In addition, the present disclosure is, for example, a program causing a computer to execute an information processing method, using a controller, including detecting at least two candidate points positioned in a detected operation direction, switching the candidate points such that a predetermined candidate point is selected from the at least two candidate points, and displaying at least the selected candidate point.

### [Advantageous Effects of Invention]

According to at least one embodiment of the present disclosure, it is possible to present candidate points positioned in an operation direction of a user. Note that the advantageous effect described here is not necessarily limiting, and any advantageous effects described in the present disclosure may be achieved. Further, interpretation of the content of the present disclosure should not be limited by the exemplified advantageous effect.

### [Brief Description of Drawings]

[Fig. 1]

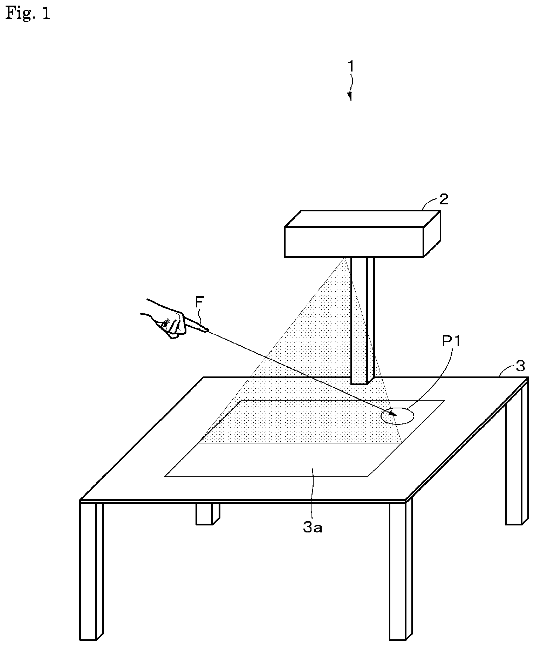

   Fig. 1 is a diagram illustrating a configuration example of a projection mapping system according to an embodiment.
[Fig. 2]

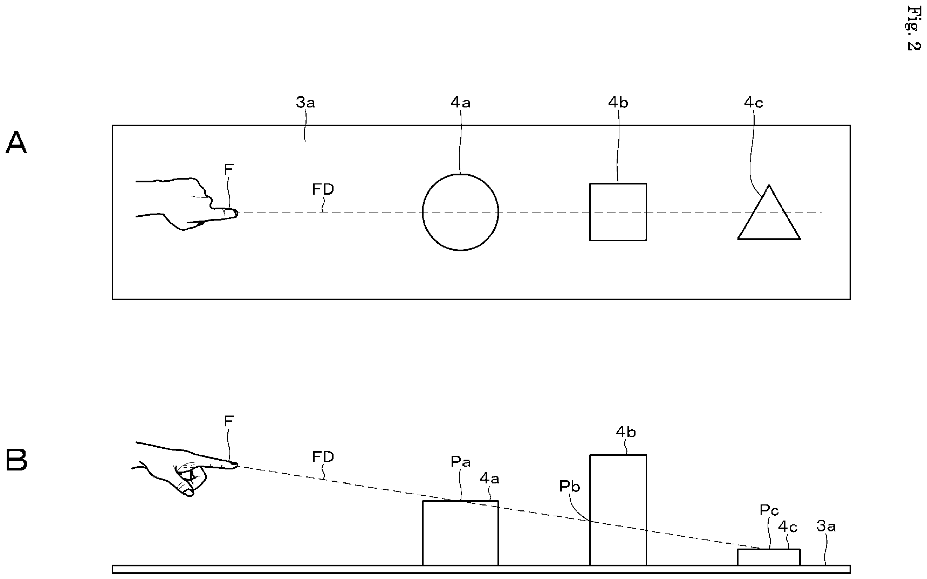

   Fig. 2A and Fig. 2B are diagrams for describing problems to be considered in an embodiment.
[Fig. 3]

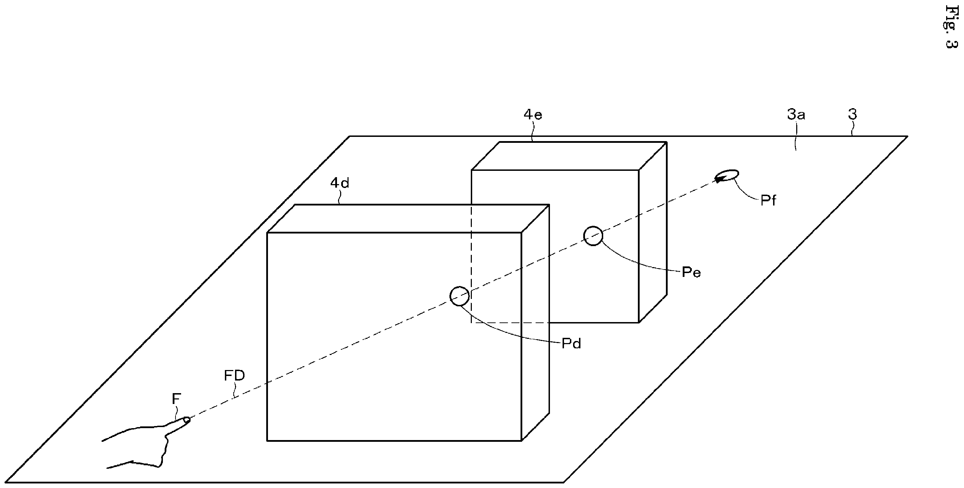

   Fig. 3 is a diagram for describing a problem to be considered in an embodiment.
[Fig. 4]

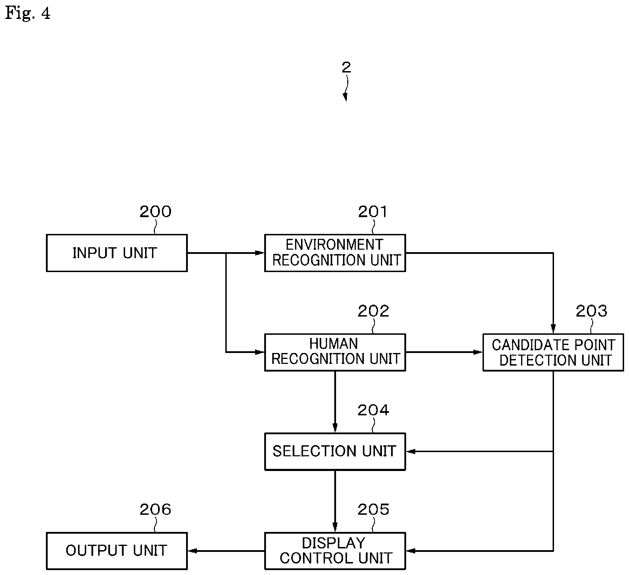

   Fig. 4 is a block diagram illustrating a configuration example of an information processing device according to the embodiment.
[Fig. 5]

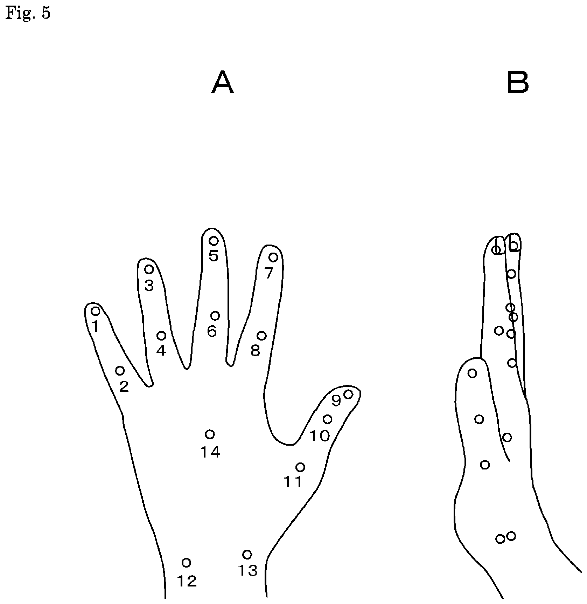

   Fig. 5A and Fig. 5B are diagrams for describing examples of feature points of hands.
[Fig. 6]

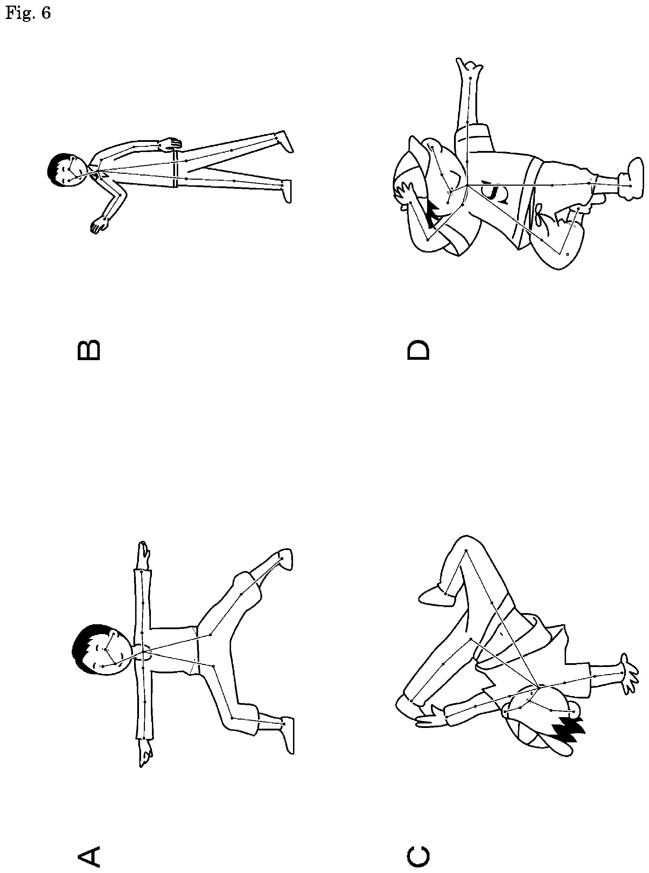

   Fig. 6A to Fig. 6D are diagrams for describing examples of feature points of bodies.
[Fig. 7]

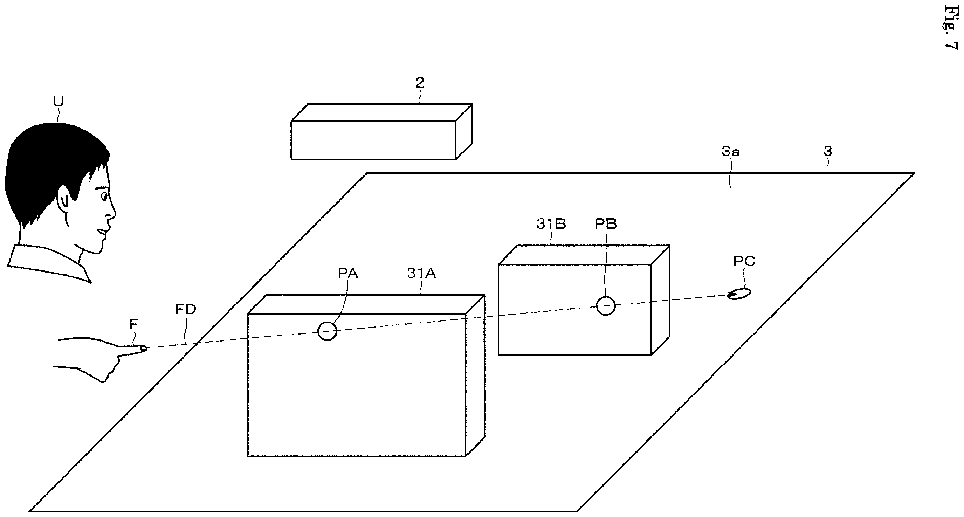

   Fig. 7 is a diagram for describing a first example with respect to display of candidate points.
[Fig. 8]

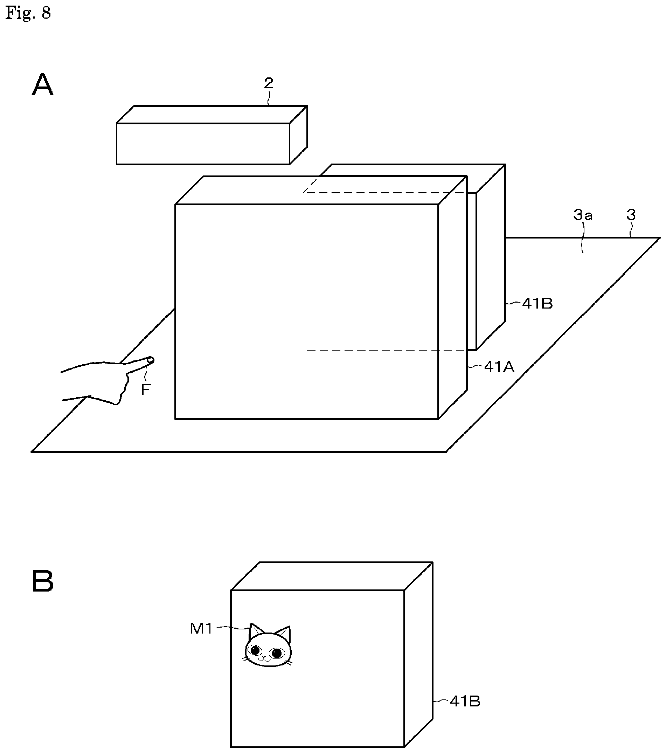

   Fig. 8A and Fig. 8B are diagrams for describing a second example with respect to display of candidate points.
[Fig. 9]

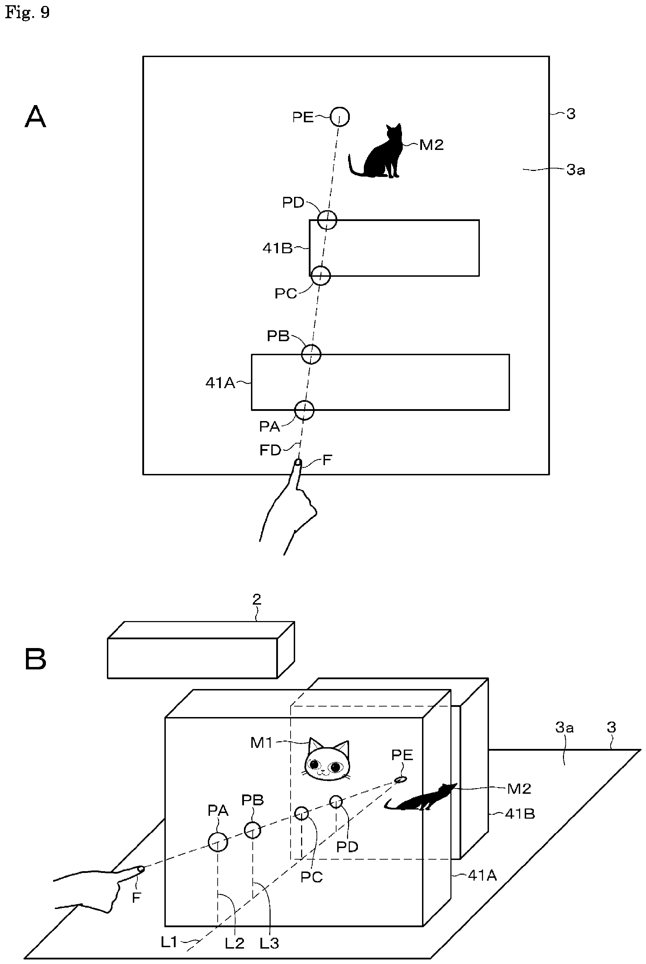

   Fig. 9A and Fig. 9B are diagrams for describing the second example with respect to display of candidate points.
[Fig. 10]

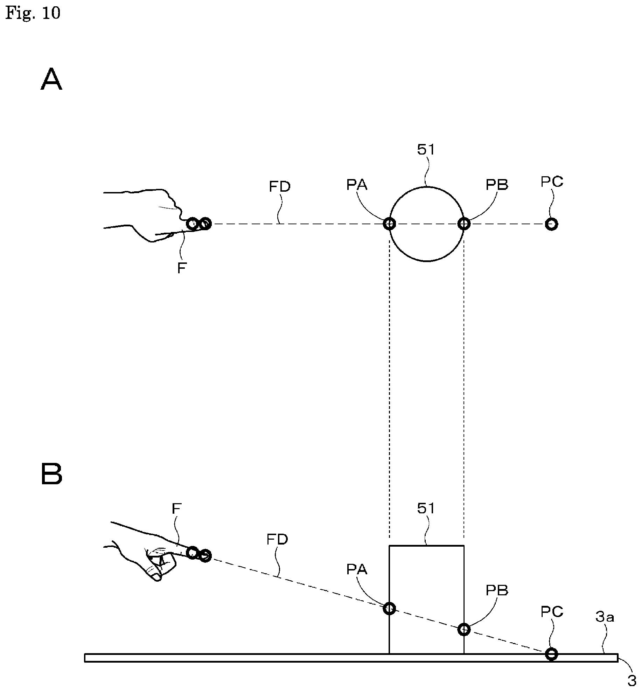

   Fig. 10A and Fig. 10B are diagrams for describing a first detection example of a candidate point.
[Fig. 11]

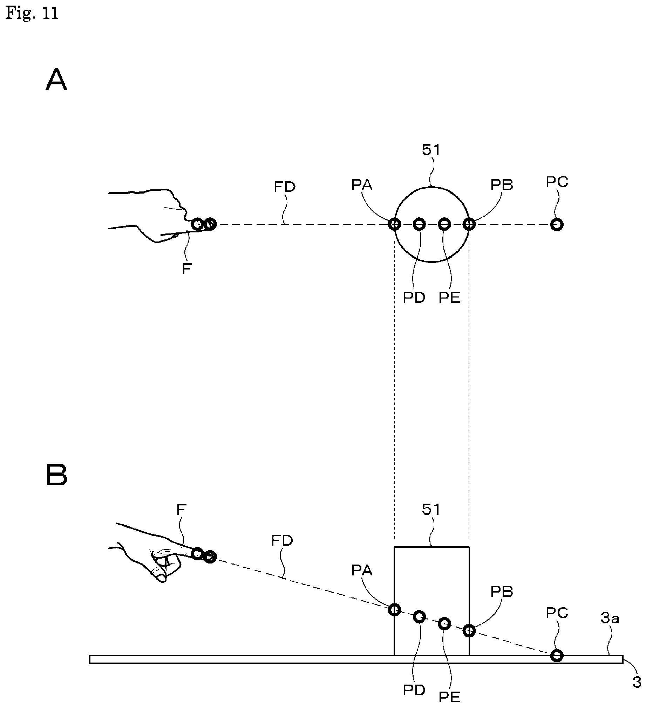

   Fig. 11A and Fig. 11B are diagrams for describing a second detection example of a candidate point.
[Fig. 12]

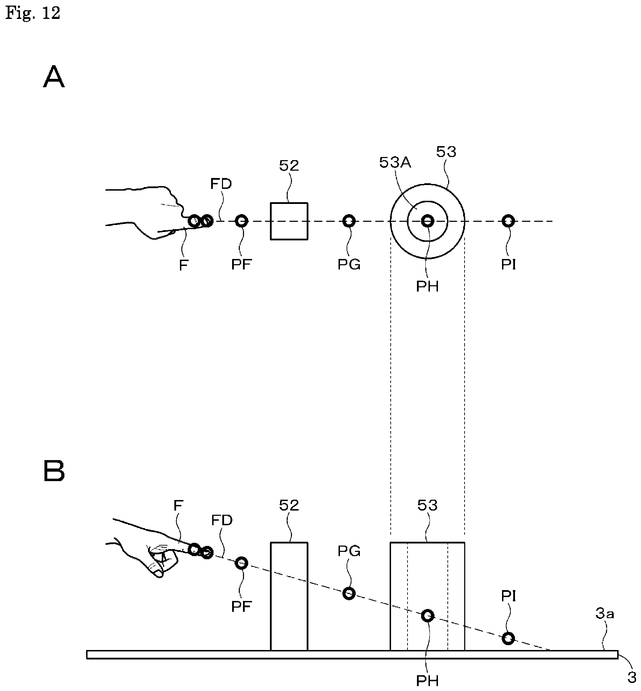

   Fig. 12A and Fig. 12B are diagrams for describing a third detection example of a candidate point.
[Fig. 13]

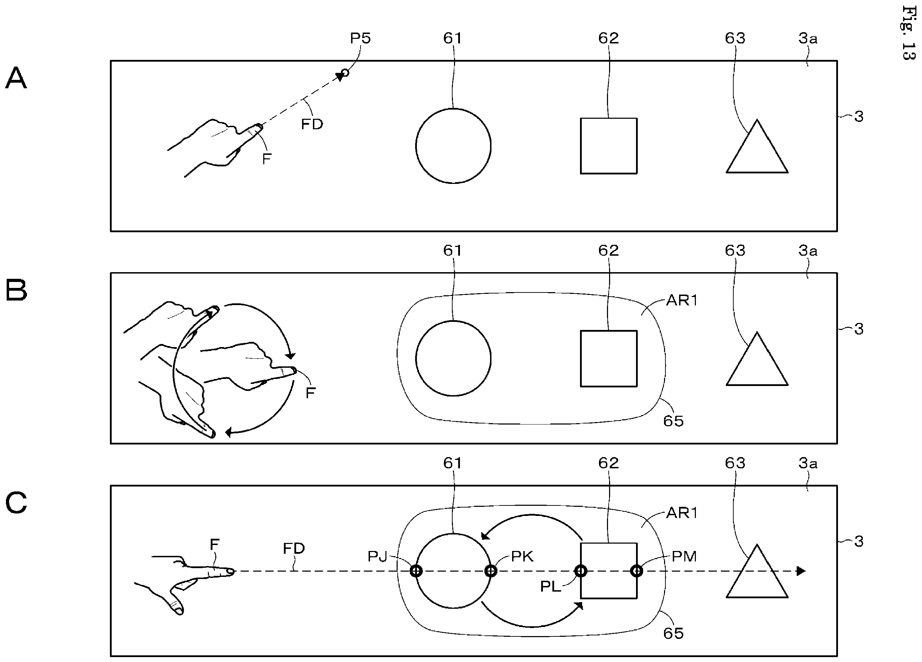

   Fig. 13A to Fig. 13C are diagrams for describing setting examples with respect to candidate points.
[Fig. 14]

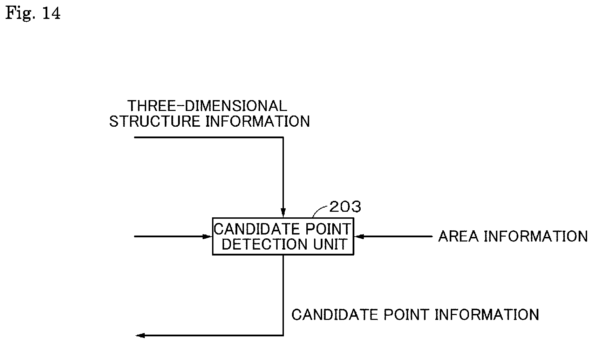

   Fig. 14 is a diagram for describing input of area information to a candidate point detection unit.
[Fig. 15]

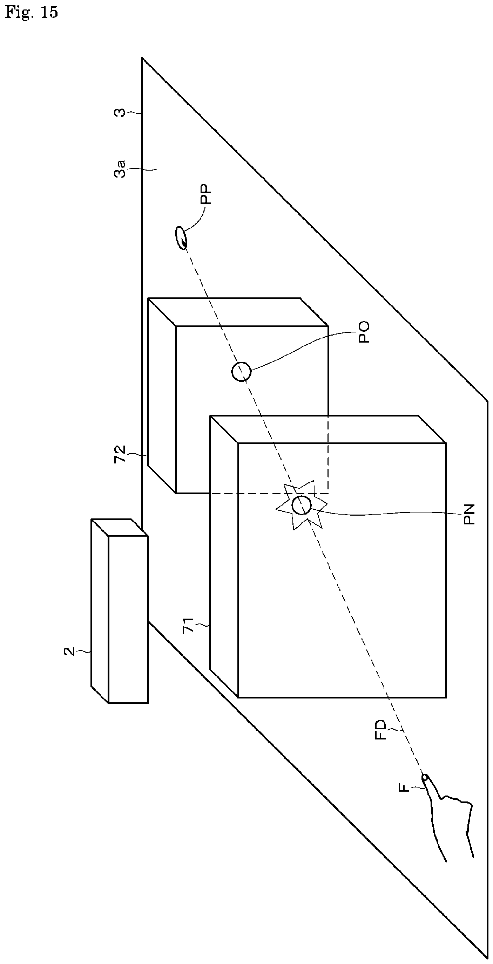

   Fig. 15 is a diagram for describing a display example of a candidate point to be selected.
[Fig. 16]

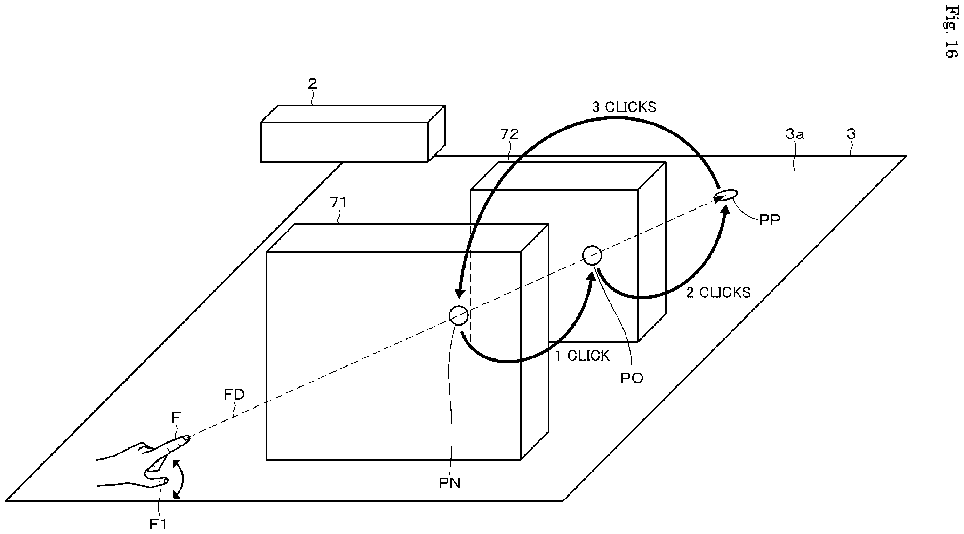

   Fig. 16 is a diagram for describing a first example of a gesture for switching candidate points to be selected.
[Fig. 17]

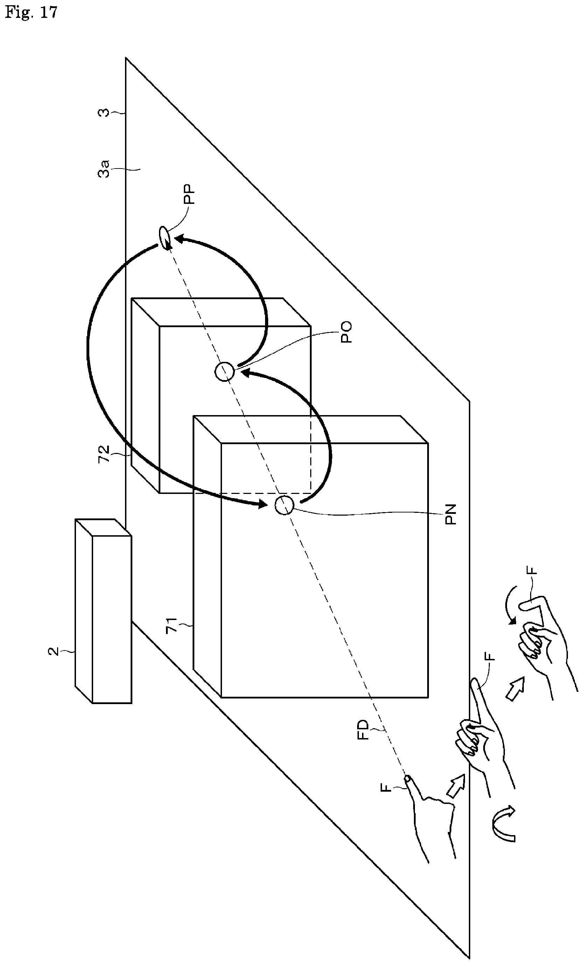

   Fig. 17 is a diagram for describing a second example of a gesture for switching candidate points to be selected.
[Fig. 18]

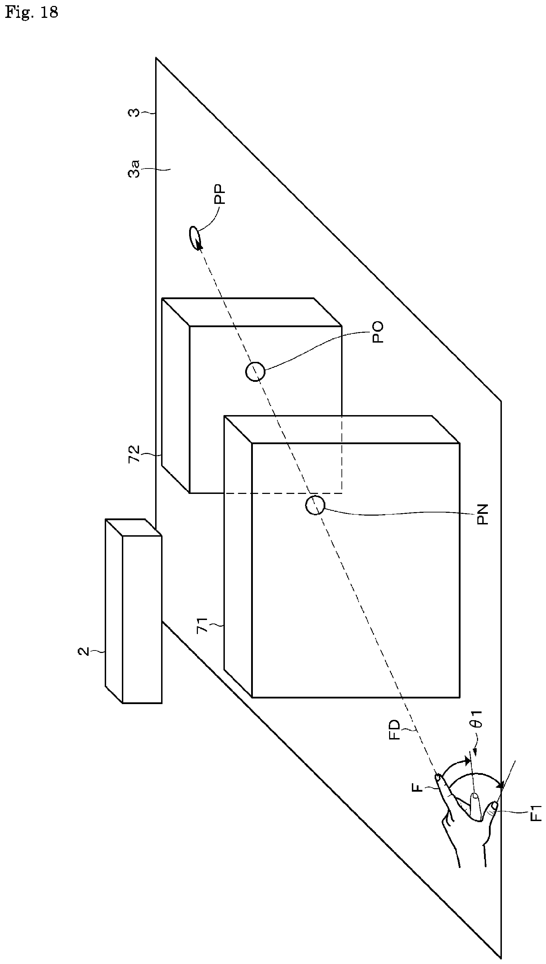

   Fig. 18 is a diagram for describing a third example of a gesture for switching candidate points to be selected.
[Fig. 19]

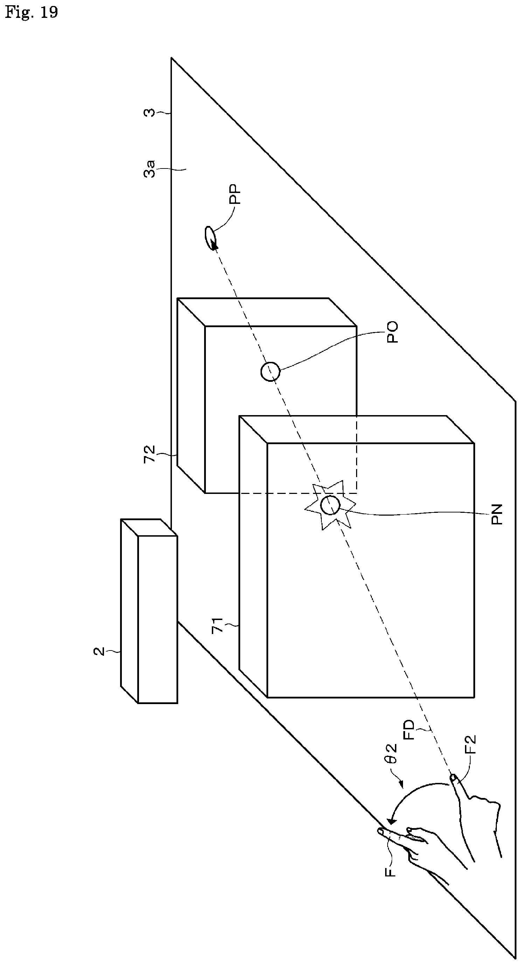

   Fig. 19 is a diagram for describing a modified example of the third example of a gesture for switching candidate points to be selected.
[Fig. 20]

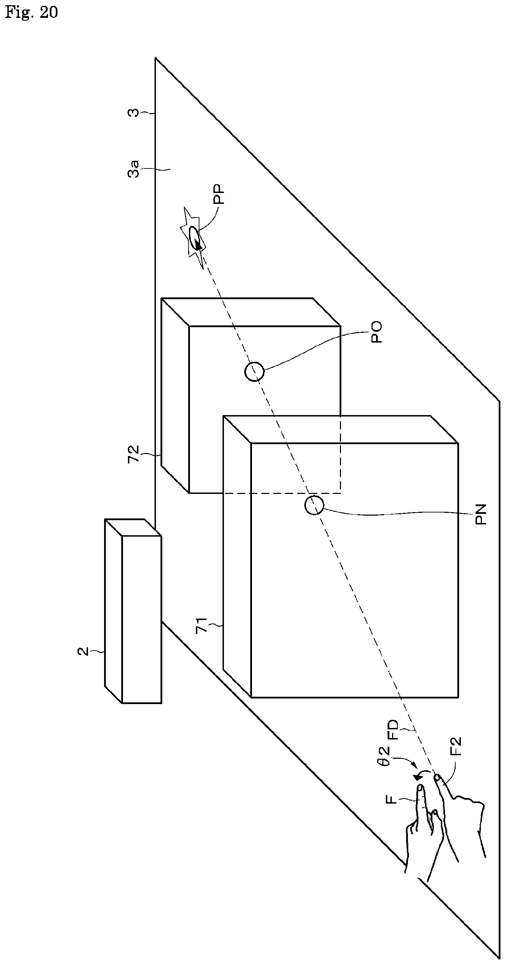

   Fig. 20 is a diagram for describing a modified example of the third example of a gesture for switching candidate points to be selected.
[Fig. 21]

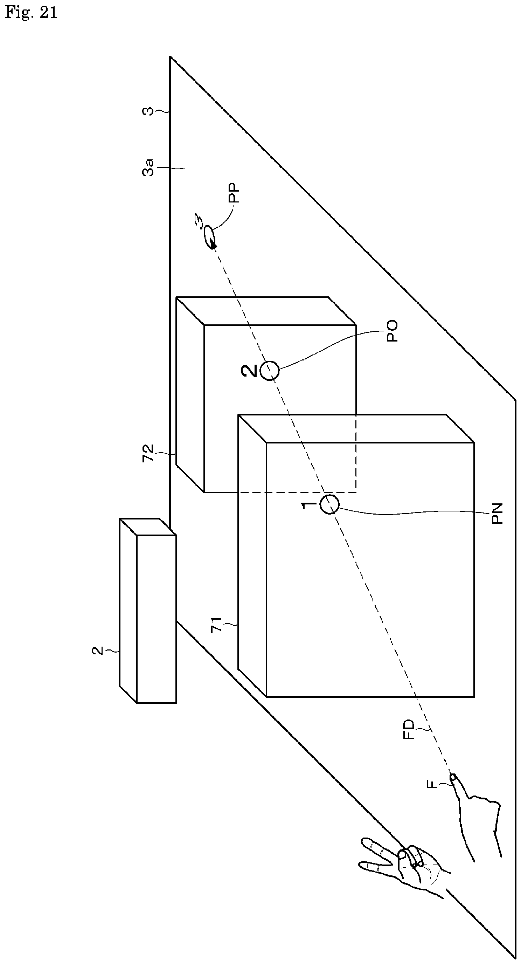

   Fig. 21 is a diagram for describing a fourth example of a gesture for switching candidate points to be selected.
[Fig. 22]

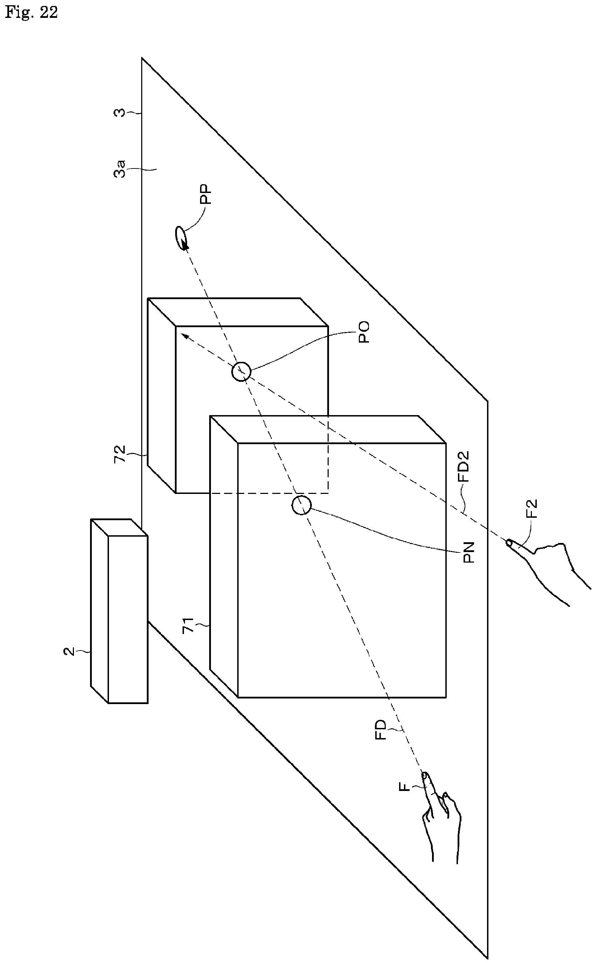

   Fig. 22 is a diagram for describing a fifth example of a gesture for switching candidate points to be selected.
[Fig. 23]

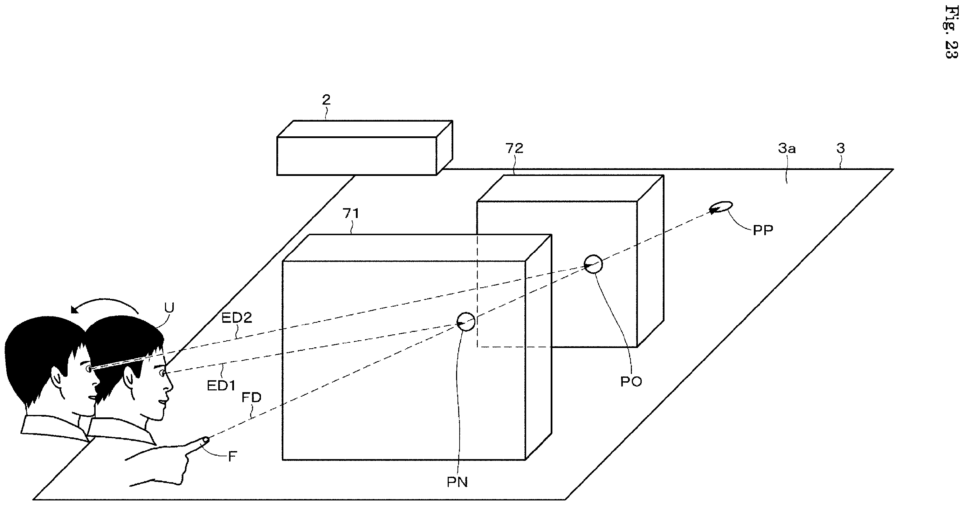

   Fig. 23 is a diagram for describing a sixth example of a gesture for switching candidate points to be selected.
[Fig. 24]

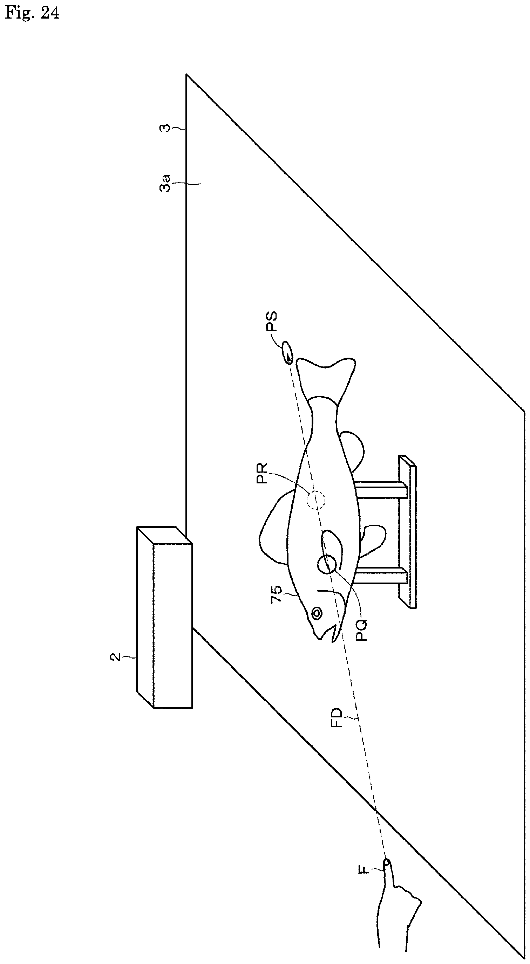

   Fig. 24 is a diagram for describing a processing example when a candidate point inside an object has been determined as a determined point.
[Fig. 25]

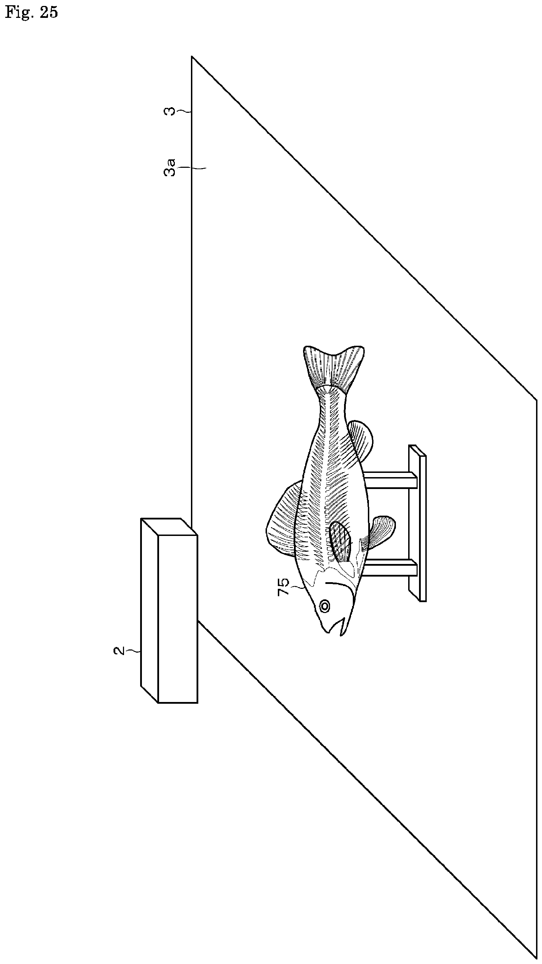

   Fig. 25 is a diagram for describing a processing example when a candidate point inside an object has been determined as a determined point.
[Fig. 26]

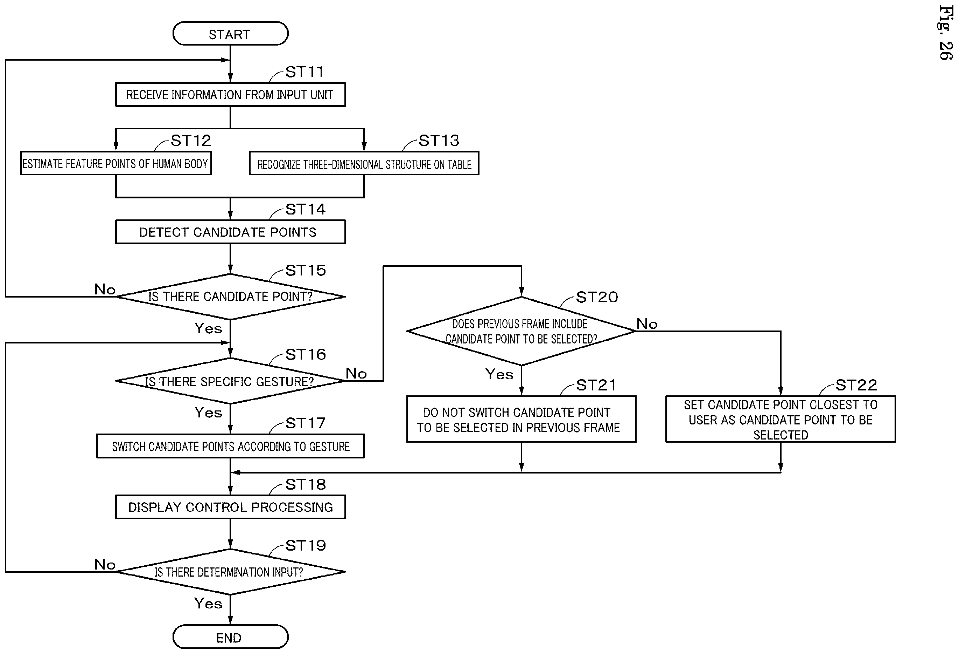

   Fig. 26 is a flowchart illustrating a flow of processing performed by the information processing device according to the embodiment.
[Fig. 27]

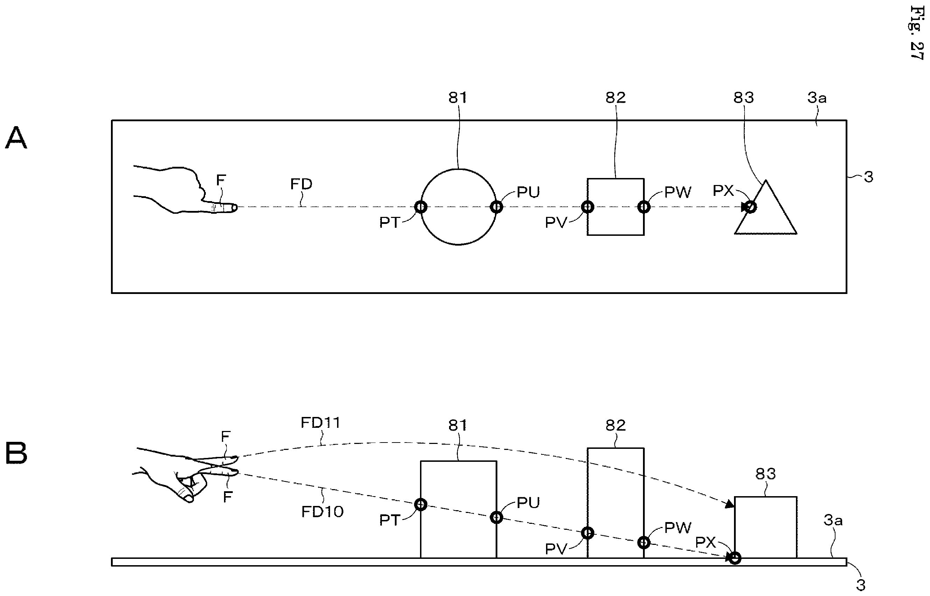

   Fig. 27A and Fig. 27B are diagrams for describing an example in which an operation direction is detected according to a gesture of a user.
[Fig. 28]

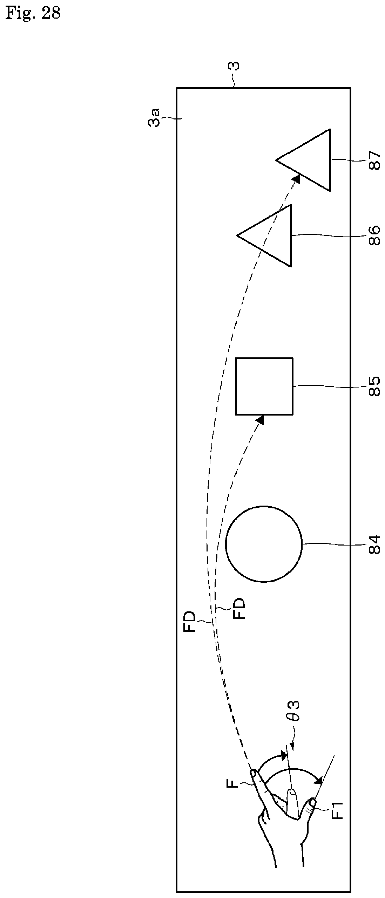

   Fig. 28A and Fig. 28B are diagrams for describing another example in which an operation direction is detected according to a gesture of a user.
[Fig. 29]

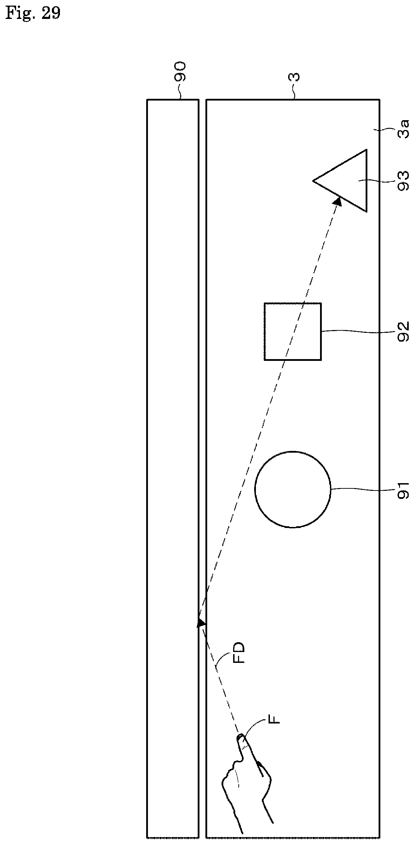

   Fig. 29 is a diagram for describing an example in which an operation direction is reflected by an object such as a wall.
[Fig. 30]

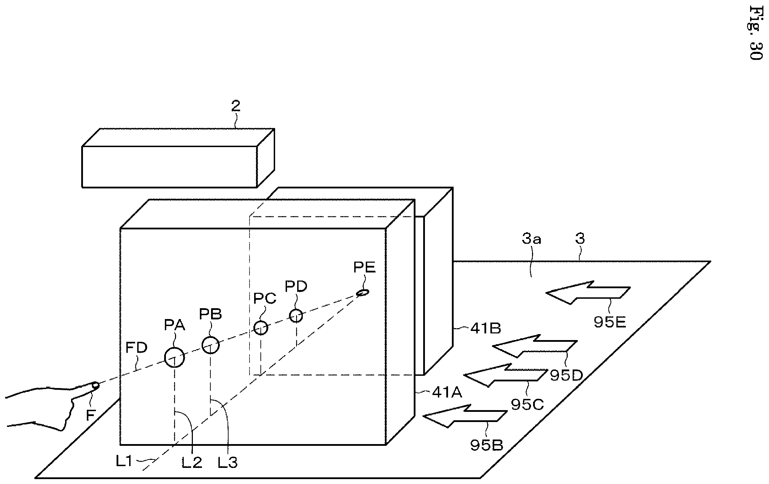

   Fig. 30 is a diagram for describing an example of projection display for informing a user of the presence or position of a candidate point invisible to the user.

### [Description of Embodiments]

Hereinafter, embodiments of the present technique will be described with reference to the drawings. Note that the description will be given in the following order.

### <Embodiment>

### <Modified examples>

Embodiments described below are preferred specific examples of the present disclosure, and the content of the present disclosure is not limited to the embodiments.

### <Embodiment>

### [Overview of Embodiment]

First, an overview of an embodiment will be described. The present embodiment is realized by a so-called projection mapping system that projects and displays (projects) various types of information on a predetermined object. Fig. 1 is a diagram illustrating a configuration example of a projection mapping system (projection mapping system 1) according to an embodiment.

The projection mapping system 1 includes an information processing device 2 which controls projection display according to projection mapping and a table 3. Predetermined information is projected and displayed on a predetermined projection area 3a on the surface of the table 3 according to control of the information processing device 2. For example, an intersection point of an operation direction pointed at by an index finger F of a user (operator) and the surface of the table 3 is displayed on the projection area 3a as an indication point P1.

Meanwhile, although Fig. 1 illustrates a configuration in which the information processing device 2 is disposed above the table 3, the present disclosure is not limited thereto. For example, a configuration in which four information processing devices 2 are disposed around the four corners of the table 3 may be employed. That is, the number and arrangement of information processing devices 2 can be appropriately determined as long as predetermined information can be displayed in the projection area 3a. In addition, although it will be described in detail later, the projection area 3a is not limited to the surface of the table 3. For example, projection display may be performed on the surface of an object disposed on the table 3.

### [Problems to be Considered in Embodiment]

First, in order to facilitate understanding of the present disclosure, problems to be considered in an embodiment will be described. Fig. 2A is a bird's-eye view of the projection area 3a viewed from above and Fig. 2B is a side view of the projection area 3a viewed from the side of the table 3. As illustrated in Fig. 2A, a case in which a cylindrical object 4a, a square columnar object 4b and a triangular columnar object 4c are disposed in a row on the projection area 3a is assumed. In addition, an example in which a predetermined direction is indicated by finger pointing using an index finger F of a user and the objects 4a, 4b and 4c are present in an operation direction FD that extends from the predetermined direction in a row is assumed.

In the case of such an example, an intersection point Pa, an intersection point Pb and an intersection point Pc are present as intersection points of the operation direction FD and the surfaces of the respective objects, as illustrated in Fig. 2B. Meanwhile, an intersection point of the operation direction FD and the surface of the table 3 may also be present according to the operation direction FD. In general technology, the intersection point Pa that is the initial intersection point in the operation direction FD is set as a point at which the user wants to point. However, the intersection point Pb and the intersection point Pc or other points may be points at which the user wants to point. In this manner, when an object is present in the operation direction FD, there is a problem that it is difficult to set a specific point as a point at which a user U wants to point due to shielding of the object, a viewpoint difference of the user, and the like.

In addition, as illustrated in Fig. 3, an example in which an object 4d and an object 4e are sequentially disposed on the projection area 3a viewed from the near side of the user is conceivable. In this case, it is assumed that a candidate point Pd, a candidate point Pe and a candidate point Pf are detected as candidate points. In such an example, when the object 4d disposed on the near side of the user is relatively large, that is, when the user cannot view the back side of the object 4d shielded by the object 4d, there is a problem that the candidate points Pe and Pf behind the object 4d cannot be recognized. The present embodiment will be described in detail in consideration of the above-described fact.

### [Configuration Example of Information Processing Device]

Fig. 4 is a block diagram illustrating a configuration example of the information processing device 2 according to the embodiment. The information processing device 2 includes, for example, an input unit 200, an environment recognition unit 201, a human recognition unit 202, a candidate point detection unit 203, a selection unit 204, a display control unit 205, and an output unit 206.

The input unit 200 is a device that detects states of the table surface of the table 3 and an object on the table 3, an input device that receives a user operation or the like, or the like. For example, a device having an image sensor is an example of the input unit 200, and more specifically, a red/green/blue (RGB) camera is an example. In addition, the input unit 200 may be a range sensor, and a stereo camera, a time of flight (ToF) camera, a structured light camera, and the like are examples of the range sensor. A sensor other than these exemplified sensors may be applied as the input unit 200.

The environment recognition unit 201 receives input information input from the input unit 200 and estimates three-dimensional structure information of the table 3 and an object on the table 3. For example, when the input unit 200 includes a range sensor, three-dimensional structure information is estimated by applying a known 3D model to a three-dimensional point group acquired from the range sensor or applying a plane to a local point group to reconstruct the point group. Of course, other methods may be applied as a method of estimating the three-dimensional structure information. The three-dimensional structure information acquired by the environment recognition unit 201 is supplied to the candidate point detection unit 203.

The human recognition unit 202 receives the input information input from the input unit 200 and estimates posture information of the user. The posture information of the user includes information about at least the hands (including fingers). An example of a method of estimating the posture information of the user is a method of representing the posture of the user as sets of feature points of joints of the hands or the body and estimating the positions thereof through a neural network. Of course, other methods may be applied as a method of estimating the posture information of the user. Meanwhile, as feature points of the hands, fingertips, knuckles, the bases of the fingers, the centers of the palms of the hands, wrists, and the like, like points indicated by white circles in Fig. 5A and Fig. 5B, can be conceived. Feature points of a finger may be combinations of a vector of the finger and a fingertip position instead of individual points. In addition, as feature points of the body, main joints of the body, and the like, like points indicated by dots shown in Fig. 6A to Fig. 6D, can be conceived. The posture information of the user acquired by the human recognition unit 202 is supplied to the candidate point detection unit 203 and the selection unit 204.

The candidate point detection unit 203 receives the posture information supplied from the human recognition unit 202 and the three-dimensional structure information supplied from the environment recognition unit 201 and detects candidate points positioned in an operation direction in which finger pointing is performed on the basis of the information. For example, an extension of a straight line (finger pointing line) that passes through a fingertip position of an index finger (e.g., a fingertip point corresponding to number 7 in Fig. 5A) and the position of a knuckle of the index finger (e.g., the position of a knuckle corresponding to number 8 in Fig. 5A) is assumed as an operation direction.

As an example, an intersection point of an operation direction and an object surface (e.g., the surface of the table 3 and the surface of an object placed on the table 3) estimated by the three-dimensional structure information is detected as a candidate point. Further, there are cases in which a single candidate point is detected by the candidate point detection unit 203 and there are also cases in which a candidate point group including a plurality of candidate points is detected by the candidate point detection unit 203. Candidate point information about a candidate point detected by the candidate point detection unit 203 is supplied to the selection unit 204 and the display control unit 205.

Meanwhile, a finger pointing line may not be a straight line, for example. In addition, not only an intersection point with respect to an object surface but also a point between surfaces may be a candidate point. Further, detected candidate points may be narrowed down according to a condition and an area set in advance. This will be described in detail later.

The selection unit 204 receives the candidate point information supplied from the candidate point detection unit 203 and the posture information supplied from the human recognition unit 202 and specifies a determined point that has been determined to be selected from among a plurality of candidate points. Meanwhile, a candidate point and a determined point are regions corresponding to predetermined positions and are not necessarily limited to a dot-shaped region. In the present embodiment, in a case where a plurality of candidate points detected by the candidate point detection unit 203 are present, candidate points to be selected are switched according to a gesture of the user. For example, the selection unit 204 detects presence or absence of a predetermined gesture on the basis of the posture information. Then, when the predetermined gesture is detected, the selection unit 204 switches (changes) candidate points to be selected. A candidate point to be selected is determined to be selected according to a gesture for determining selection, elapse of time for selection, or the like and specified as a determined point. Meanwhile, when there is a single candidate point, candidate point switching is not performed. Selection information acquired according to operation of the selection unit 204 is supplied to the display control unit 205.

The display control unit 205 mainly performs control with respect to projection display. For example, the display control unit 205 performs control for projection display of candidate points for the surface of the table 3 and an object on the table 3 on the basis of the candidate point information supplied from the candidate point detection unit 203. In addition, the display control unit 205 performs control with respect to display for switching candidate points to be selected on the basis of the selection information input from the selection unit 204.

The output unit 206 is a device that outputs information according to control of the display control unit 205. The output unit 206 is, for example, a projector or a head up display (HUD). Further, a device in addition to the projector (e.g., a display or a speaker) may be included in the output unit 206.

In the present embodiment, as an example, a controller is composed of the candidate point detection unit 203, the selection unit 204 and the display control unit 205.

### [Operation Example of Information Processing Device]

An operation example of the information processing device 2 will be schematically described. The environment recognition unit 201 acquires three-dimensional structure information on the basis of input information input from the input unit 200. In addition, the human recognition unit 202 acquires posture information of a user on the basis of the input information input from the input unit 200. The candidate point detection unit 203 detects an operation direction on the basis of the posture information. Then, the candidate point detection unit 203 detects candidate points positioned in the operation direction. Candidate point information about the detected candidate points is supplied to the display control unit 205. The display control unit 205 performs control with respect to projection display of the candidate points on the basis of the candidate point information. The output unit 206 operates according to control of the display control unit 205 and thus the candidate points are presented to the user.

The selection unit 204 detects whether a predetermined gesture has been performed on the basis of the posture information. When the gesture has been performed, selection information is output to the display control unit 205. The display control unit 205 controls the output unit 206 such that projection display for switching candidate points to be selected is performed on the basis of the selection information. For example, the display control unit 205 generates display data such that candidate points to be selected are switched and controls the output unit 206 such that projection display based on the display data is performed. The output unit 206 operates according to control of the display control unit 205, and thus a state in which the candidate points to be selected are switched is presented to the user. At least the candidate points to be selected are presented to the user through projection display according to projection.

Meanwhile, the selection unit 204 detects whether a gesture for determining a candidate point to be selected as a determined point has been performed on the basis of the posture information. When the gesture has been performed, determination information representing the purport of the gesture is output. Processing according to an application is performed on the basis of the determination information. For example, processing of projecting and displaying predetermined information such as fireworks at the position of the determined point and processing of reproducing sound or the like from the position of the determined point are performed. The determination information output from the selection unit 204 is supplied to a component that executes the above-described processing. The component may be included in the information processing device 2.

### [Specific Example of Presentation of Candidate Point]

### (First example)

Next, specific examples related to presentation of candidate points will be described. Fig. 7 is a diagram for describing a first example related to presentation of candidate points. As illustrated in Fig. 7, an example in which box-shaped objects 31A and 31B are placed on the projection area 3a of the table 3 in a row at a specific interval is assumed. A user U is present near a corner of the table 3 (near a bottom left corner in Fig. 7). The objects appear to be arranged in the order of the objects 31A and 31B to the user U. Meanwhile, in this example, an environment in which the objects 31A and 31B are relatively small objects and the user U looks over the entire projection area 3a is assumed.

When the user U performs finger pointing using an index finger F, an operation direction FD that is a direction indicated by the finger pointing is detected by the information processing device 2. Meanwhile, although the operation direction FD is described by a line that is actually invisible in the present embodiment, it may be visible according to hologram or the like.

Then, the information processing device 2 detects candidate points positioned in the operation direction FD. In the example illustrated in Fig. 7, an intersection point of the operation direction FD and the surface of the object 31A (the surface on the side of the user U), an intersection point of the operation direction FD and the surface of the object 31B (the surface on the side of the user U), and an intersection point of the operation direction FD and the projection area 3a (the surface of the table 3) are detected as candidate points PA, PB and PC. The detected candidate points PA, PB and PC are projected and displayed according to processing of the information processing device 2. The information processing device 2 projects and displays the candidate point PA at a position corresponding to the surface of the object 31A. The information processing device 2 projects and displays the candidate point PB at a position corresponding to the surface of the object 31B. The information processing device 2 projects and displays the candidate point PC at a position corresponding to the projection area 3a.

As described above, in the general technology, the candidate point PA is recognized as an indication point and various types of processing are performed when a shielding object such as the object 31A is present in the operation direction FD. Accordingly, there is a problem that at least one point that cannot be indicated at the operation position of the user U, such as the candidate points PB and PC, more specifically, a candidate point positioned behind the object 31A that is a shielding object cannot be indicated. However, in the present embodiment, the candidate points PB and PC are also displayed and selectable. Accordingly, the user U may select the candidate point PB or the candidate point PC when a point at which that the user wants to point is the candidate point PB or the candidate point PC. Of course, the user U may select the candidate point PA when a point that the user wants to indicate is the candidate point PA. Accordingly, the user U can also select a point shielded by the object 31A as an indication point. Meanwhile, the inside of a shielding object positioned in the operation direction FD is another example of a point that cannot be indicated at the operation position of the user U.

In this case, a determined point that is at least a selected candidate point is projected and displayed. Accordingly, another user present near the projection area 3a (not illustrated) can recognize which point is an indication point.

### (Second example)

A second example with respect to presentation of candidate points will be described with reference to Fig. 8 and Fig. 9. As illustrated in Fig. 8A, an example in which an object 41A and an object 41B are arranged in a row on the projection area 3a at a specific interval is assumed. The user U performs finger pointing near a corner of the table 3 (near a bottom left corner in Fig. 8A). Meanwhile, in this example, a case in which the object 41A is a relatively large object and it is impossible or difficult for the user U to visibly recognize the back side of the object 41A is assumed. Further, as illustrated in Fig. 8B, a pattern M1 resembling the face of a cat has been drawn on the surface of the object 41B (the surface on the side of the user U).

Fig. 9A is a bird's-eye view of the arrangement illustrated in Fig. 8A viewed from above. A pattern M2 resembling a black cat has been drawn on the back side of the object 41B on the projection area 3a when viewed from the side of the user U. When the user U performs finger pointing using an index finger F, an operation direction FD that is a direction indicated by the finger pointing is detected by the information processing device 2. Then, the information processing device 2 detects candidate points positioned in the operation direction FD.

In the example illustrated in Fig. 9A, intersection points of the operation direction FD and both surfaces (the front surface and the back surface) of the object 41A are detected as candidate points PA and PB. In addition, intersection points of the operation direction FD and both surfaces (the front surface and the back surface) of the object 41B are detected as candidate points PC and PD. An intersection point of the operation direction FD and the projection area 3a is detected as a candidate point PE. The detected candidate points are projected and displayed according to processing of the information processing device 2. However, there is a problem that the user U can recognize only the candidate point PA when each candidate point is simply projected and displayed at its position. That is, the candidate point PB is present on the back side of the object 41A and shielded by the object 41A, and thus the user U cannot recognize the candidate point PB. The same applies to the candidate points PC to PE.

Accordingly, the display control unit 205 generates image data such that the candidate points PB to PE present behind the object 41A can be recognized by the user U. Then, the display control unit 205 controls the output unit 206 such that the image data is projected and displayed, for example, on the surface of the object 41A that is visibly recognized by the user U. According to such processing, the candidate points PA to PE are projected and displayed on the surface of the object 41A, as illustrated in Fig. 9B. Accordingly, the user U can recognize the candidate points PB to PE that he/she cannot actually see. In addition, the user U can appropriately select the candidate points PA to PE to determine a determined point as will be described later.

Meanwhile, as illustrated in Fig. 9B, candidate points on the near side may be displayed to be large and candidate points on the far side may be displayed to be small such that the user U can recognize a positional relationship between candidate points (e.g., depth). Further, candidate points on the near side may be displayed to be dark and candidate points on the far side may be displayed to be light. In addition, a line L1 obtained by projecting the operation direction FD to the projection area 3a and perpendicular lines drawn with respect to the line L1 from each candidate point (perpendicular lines L2 and L3, and the like in Fig. 9B) may be projected and displayed.

In addition, as illustrated in Fig. 9B, the pattern M1 and the pattern M2 that are patterns shielded by the object 41A and cannot be visibly recognized by the user U may be projected and displayed on the surface of the object 41A along with the candidate point PA and the like. According to such projection display, the user U can appropriately select a candidate point. For example, a case in which the user U recognizes that the pattern M2 resembling a black cat has been drawn on the projection area 3a in advance and wants to point to the vicinity of the pattern M2 is assumed. In such a case, since the pattern M2 is projected and displayed along with the candidate point PA and the like, the user U can recognize that the candidate point PE near the pattern M2 may be selected.

Meanwhile, the example presented above is merely an example and the present disclosure is not limited thereto. Candidate points detected according to processing of the information processing device 2 on the basis of a candidate point detection example which will be described later are presented through projection display in a state in which the user can recognize them.

### [Candidate Point Detection Example]

Next, an example with respect to which point will be detected by the candidate point detection unit 203 as a candidate point in candidate point detection processing performed by the candidate point detection unit 203 will be described.

### (First example)

Fig. 10A and Fig. 10B are diagrams for describing a first candidate point detection example. Fig. 10A is a bird's-eye view viewed from above the table 3 and Fig. 10B is a side view viewed from the side of the table 3. For example, a state in which a cylindrical object 51 is placed on the projection area 3a is assumed. Meanwhile, an arrangement position and three-dimensional structure information of the object 51 are recognized by the environment recognition unit 201. Then, the user U performs finger pointing using an index finger F. In addition, the candidate point detection unit 203 detects, as an operation direction FD, a direction extending from a straight line (finger pointing line) that passes through a fingertip position corresponding to number 7 and the position of a knuckle corresponding to number 8 (refer to Fig. 5).

The first example is an example in which the candidate point detection unit 203 detects intersection points of the operation direction FD and the surface of the object as candidate points. As illustrated in Fig. 10A and Fig. 10B, intersection points of the operation direction FD and the object 51A are detected as candidate points PA and PB and an intersection point of the operation direction FD and the projection area 3a (the surface of the table 3) is detected as a candidate point PC.

### (Second example)

Fig. 11A and Fig. 11B are diagrams for describing a second candidate point detection example. The second example is an example of additionally detecting predetermined points inside an object as candidate points with respect to the first example. As illustrated in Fig. 11A and Fig. 11B, the candidate points PA, PB and PC described in the first example are detected as candidate points. Further, predetermined points inside the object 51 are detected as candidate points PD and PE. For example, the range between the candidate points PA and PB present on the surface of the object 51 is divided by N (3 in the illustrated example) and division points are detected as candidate points PD and PE. In this manner, predetermined points inside the object 51 may be detected as candidate points. Further, the candidate points PD and PE may be detected through a division method different from equal division.

Meanwhile, the object 51 is, for example, a real object (a real object that is not hollow). Accordingly, the candidate points PD and PE cannot be presented to the user U as they are. In such a case, the display control unit 205 generates image data in which the candidate points PD and PE are present inside the object 51 and projects and displays an image based on the image data on the surface of the object 51, as described above with reference to Fig. 9. For example, image data in which the density of display of the candidate points PD and PE is lower than the density of display of other candidate points is generated and an image based on the image data is projected and displayed on the surface of the object 51. Marks corresponding to the candidate points PD and PE may be indicated by a dotted-line circle, or the like. Accordingly, the user U can recognize presence of the candidate points PD and PE that are selectable candidate points inside the object 51.

Meanwhile, although it will be described in detail later, when a candidate point inside the object 51 is determined as a determined point, the display control unit 205 may generate image data in which the inside of the object 51 is transparent and visible and project and display an image based on the image data on the surface of the object 51, for example. When the user U wants to know the structure and state of the inside of the object 51, he/she may determine the candidate points PD and PE inside the object 51 as determined points.

### (Third example)

Fig. 12A and Fig. 12B are diagrams for describing a third candidate point detection example. For example, an example in which a square columnar object 52 and a cup-shaped object 53 having a cavity part 53A inside are disposed on the projection area 3a is assumed. The user U performs finger pointing in a lateral direction of the object 52.

The operation direction FD is detected as in the first example. The third example is an example of detecting a predetermined point between the surfaces of objects in the operation direction FD as a candidate point. For example, a vicinity of the center between the fingertip of an index finger F and a surface of the object 52 (surface positioned on the side of the user U) is detected as a candidate point PF. In addition, a vicinity of the center between the object 52 and the object 53 is detected as a candidate point PG. Further, a vicinity of the center between internal circumferential surfaces of the object 53 is detected as a candidate point PH. Further, a vicinity of the center between the object 53 and the table 3 is detected as a candidate point PI. In this manner, predetermined points between objects may be detected as candidate points. Further, a point other than a vicinity of the center between objects may be detected as a candidate point.

Meanwhile, an object on which an image will be projected and displayed is not present at a point between objects corresponding to the candidate point PF or the like. Accordingly, when a candidate point is detected as in this example, display on a point corresponding to the candidate point is performed through augmented reality (AR), virtual reality (VR), or the like. For example, when the candidate point PG is selected as a determined point, predetermined display using AR or the like (e.g., display of a mascot character) is performed between the object 52 and the object 53. In addition, when the candidate point PH is selected as a determined point, display such as pouring a drink into the cup-shaped object 53 is performed through AR or the like.

In the above-described third example, intersection points of the operation direction FD and the surfaces of objects may be detected as candidate points as in the first example. In addition, in the above-described third example, predetermined points inside objects may be detected as candidate points as in the second example.

Candidate point detection examples have been described above. A dot-shaped mark indicating a candidate point, or the like is projected and displayed on the surface of an object at a position corresponding to each detected candidate point.

### [Settings for Candidate Points]

Candidate point detection examples have been described above. In the present embodiment, predetermined detection rules can be set for candidate points detected by the candidate point detection unit 203. The predetermined detection rules are settings with respect to an area and a position at which a candidate point is detected. Although settings with respect to a detection area in which a candidate point is detected will be mainly described below, settings with respect to projection display of a candidate point (e.g., a color and a size when a candidate point is projected and displayed) may be possible.

The detection rules are as follows, for example.

A rule of excluding a candidate point positioned on the back side of an object as viewed by the user U.

A rule of indicating which pattern in the above-described first to third examples is used to detect a candidate point.

(Meanwhile, switching of patterns may be performed through a gesture or the like.)

A rule of excluding a candidate point from candidate points if a selection action is undefined in an application.

Settings with respect to candidate points are performed through an appropriate method such as an input through a gesture, an input to an input device such as a remote controller or a button, or an audio input.

An area in which a candidate point is detected may be specifically set by the user U. Fig. 13A to Fig. 13C are diagrams for describing setting examples with respect to candidate points and both bird's-eye views viewed from above the projection area 3a.

For example, as illustrated in Fig. 13A, an example in which a cylindrical object 61, a square columnar object 62 and a triangular columnar object 63 are placed on the projection area 3a is assumed. The arrangement position and three-dimensional shape of each object are acquired by the environment recognition unit 201 as three-dimensional structure information.

Here, a case in which the user U performs an operation of indicating the projection area 3a with an index finger F from the left side (the side of the object 61) when facing the drawing is conceived. An intersection point of the operation direction FD of the index finger F and the surface of the projection area 3a is projected and displayed by the information processing device 2 as a point P5. Then, the user U performs an operation of rotating the index finger F, as illustrated in Fig. 13B. The position of the point P5 changes according to this operation and a trajectory according to movement of the point P5 is projected and displayed on the projection area 3a. As illustrated in Fig. 13B, for example, a trajectory 65 surrounding the object 61 and the object 62 is projected and displayed. An area AR1 defined by the trajectory 65 is set as an area in which a candidate point is detected by the candidate point detection unit 203.

When the first example is applied as a candidate point detection example, candidate points PJ, PK, PL and PM positioned in the area AR1 are detected, as illustrated in Fig. 13C. Meanwhile, switching of candidate points which will be described later is performed among the detected four candidate points.

Further, information indicating the set area AR1 is input to the candidate point detection unit 203 as area information, as illustrated in Fig. 14. The candidate point detection unit 203 appropriately limits areas in which candidate points are detected on the basis of the area information. The area information is generated by the environment recognition unit 201, for example, on the basis of an image acquired by a camera, or the like. The area information is defined, for example, by X-Y coordinates of the projection area 3a, but it may be defined by other content.

The candidate point detection rules are not only set by a user but also included in advance in the candidate point detection unit 203. For example, the candidate point detection unit 203 may have a rule of excluding a candidate point at a position at which projection display cannot be performed, or the like.

It is possible to avoid inconvenience, for example, due to presentation of many candidate points to the user U by allowing settings with respect to candidate points to be performed, more specifically, settings with respect to areas in which candidate points are detected and settings for excluding a candidate point from detected candidate points to be performed. For example, it is possible to avoid difficulty in viewing due to projection display of many candidate points and inconvenience that the number of times candidate points are switched increases when a determined point is determined.

### [With respect to Selection of Candidate Point]

As described above, detected candidate points are appropriately projected and displayed. A predetermined candidate point is selected when a plurality of candidate points are present, and if a position corresponding to the selected candidate point is a point that the user U wants to indicate, the candidate point is determined as a determined point. Meanwhile, at least a candidate point to be selected is projected and displayed. In the present embodiment, the selected candidate point is projected and displayed along with other candidate points.

In the form of the present embodiment, when a plurality of candidate points are present, candidate points to be selected are switched according to a predetermined gesture of the user U. Specifically, the selection unit 204 detects a predetermined gesture or the like on the basis of posture information and switches candidate points to be selected when the gesture is performed. Selection information indicating candidate points to be selected is supplied to the display control unit 205. The display control unit 205 performs control with respect to presentation for switching candidate points to be selected on the basis of the selection information.

### (With respect to Presentation of Candidate Points to be selected)

Fig. 15 is a diagram for describing an example of displaying candidate points to be selected. As illustrated in Fig. 15, an example in which box-shaped objects 71 and 72 are placed on the projection area 3a is assumed. The object 71 is larger than the object 72. The user U performs a finger pointing operation using an index finger F from the near side of the object 71, and an operation direction FD based on the operation is detected. Candidate points positioned in the operation direction FD are detected. In this example, candidate points PN, PO and PP are detected according to the above-described candidate point detection example (first example). It is assumed that each candidate point can be visibly recognized by the user U.

Fig. 15 illustrates an example in which a candidate point to be selected is the candidate point PN. In this manner, the candidate point PN to be selected is more emphasized than other candidate points PO and PP and presented. For example, the candidate point PN more brightens, more shines, has a darker display color, has a more vivid display color, has a larger icon (circle in this example) indicating the candidate point, or has a more flickering icon indicating the candidate point than other candidate points. Meanwhile, when the candidate point to be selected is switched from the candidate point PN to the candidate point PO, for example, the candidate point PO is emphasized and presented.

### (With respect to Switching of Candidate Points to be selected)

Next, an example of a gesture for switching candidate points to be selected will be described. Fig. 16 is a diagram for describing a first example of a gesture for switching candidate points to be selected. In the first example, candidate points to be selected are switched when a gesture of clicking a thumb F 1 is detected in a state in which finger pointing using an index finger F has been performed. The gesture of clicking the thumb F1 is a gesture of moving the thumb F1 such that a distance between the index finger F and the thumb F1 is narrowed once from a state in which the distance has been extended and then returning the thumb F1 to the original position.

As illustrated in Fig. 16, candidate points PN, PO and PP are detected as candidate points. Meanwhile, the candidate point PN closest to the user U is set as a candidate point to be selected, for example, in an initial state (an initial state in which detected candidate points are presented). Of course, the candidate point PO and the candidate point PP may be candidate points to be selected in the initial state.

For example, when the gesture of clicking the thumb F1 (first click) is performed, the candidate point to be selected is switched from the candidate point PN to the candidate point PO. Further, when the gesture of clicking the thumb F1 (second click) is performed, the candidate point to be selected is switched from the candidate point PO to the candidate point PP. Further, when the gesture of clicking the thumb F1 (third click) is performed, the candidate point to be selected is switched from the candidate point PP to the candidate point PN.

Fig. 17 is a diagram for describing a second example of a gesture for switching candidate points to be selected. As in the above-described example, the candidate points PN, PO and PP are detected according to a gesture of pointing with the index finger F. In the initial state, for example, the candidate point PN closest to the user U is set as a candidate point to be selected.

Here, it is assumed that a gesture of twisting a hand is performed, for example. Upon detection of this gesture, the selection unit 204 determines that a mode has switched to a switching mode in which the candidate point to be selected is switched and performs processing of switching the candidate point to be selected. In this state, a gesture of bending the index finger F, for example, is performed. The candidate point to be selected is switched according to the gesture. For example, when the gesture of bending the index finger F is performed once in the initial state, the candidate point to be selected is switched from the candidate point PN to the candidate point PO. When the gesture of bending the index finger F is additionally performed once, the candidate point to be selected is switched from the candidate point PO to the candidate point PP. When the gesture of bending the index finger F is additionally performed once, the candidate point to be selected is switched from the candidate point PP to the candidate point PN. In this manner, candidate points to be selected are continuously switched in the first example and the second example.

Fig. 18 is a diagram for describing a third example of a gesture for switching candidate points to be selected. As in the above-described examples, the candidate points PN, PO and PP are detected according to the gesture of pointing with the index finger F. In the initial state, for example, the candidate point PN closest to the user U is set as a candidate point to be selected.

The third example of a gesture for switching candidate points to be selected is an example of switching candidate points to be selected in response to the size of an angle θ1 formed by the index finger F and the thumb F1. For example, two threshold values Th1 and Th2 are set for the angle θ1. When the angle formed by the index finger F and the thumb F1 is small, specifically, if the angle θ1 is less than the threshold value Th1, the candidate point PN becomes a candidate point to be selected. In addition, when a gesture of increasing the angle formed by the index finger F and the thumb F1 is performed and thus the angle θ1 becomes equal to or greater than the threshold value Th1, the candidate point to be selected is switched from the candidate point PN to the candidate point PO. When a gesture of increasing the angle formed by the index finger F and the thumb F1 is additionally performed and thus the angle θ1 becomes equal to or greater than the threshold value Th2, the candidate point to be selected is switched from the candidate point PO to the candidate point PP. Meanwhile, when a gesture of decreasing the angle formed by the index finger F and the thumb F1, for example, is performed, specifically, when the angle θ1 becomes less than the threshold value Th1, the candidate point to be selected is switched from the candidate point PP to the candidate point PN. Meanwhile, (discontinuous) switching may be performed such that the candidate point to be selected jumps from the candidate point PN to the candidate point PP according to, for example, an operation of increasing the angle θ1 at a time in this example. Meanwhile, two threshold values are present because there are three candidate points in this example. Of course, the set number of threshold values, and the like may be appropriately changed.

Although candidate points to be selected are switched in response to an angle formed by the index finger F and the thumb F1 of one hand in the above-described third example, candidate points to be selected may be switched in response to an angle formed by the index finger F of one hand and the index finger F2 of the other hand, as illustrated in Fig. 19 and Fig. 20.

For example, switching may be performed such that a candidate point positioned on the near side becomes a candidate point to be selected when an angle θ2 formed by the index finger F and the index finger F2 is large, as illustrated in Fig. 19, and switching may be performed such that a candidate point positioned on the far side becomes a candidate point to be selected as the angle θ2 formed by the index finger F and the index finger F2 decreases, as illustrated in Fig. 20. On the contrary, switching may be performed such that a candidate point positioned on the near side becomes a candidate point to be selected when the angle θ2 is small, and switching may be performed such that a candidate point positioned on the far side becomes a candidate point to be selected as the angle θ2 increases.

In the case of a gesture using fingers of both hands, candidate points to be selected can also be switched according to gestures below. For example, when a gesture of making the index finger F and the index finger F2 approximately parallel to each other is performed, candidate points to be selected may be sequentially switched from a candidate point on the near side to a candidate point on the far side. In addition, when a gesture of crossing the index finger F and the index finger F2 in the form of the figure of 8 is performed, for example, candidate points to be selected may be sequentially switched from a candidate point on the far side to a candidate point on the near side.

Fig. 21 is a diagram for describing a fourth example of a gesture for switching candidate points to be selected. As in the above-described examples, the candidate points PN, PO and PP are detected according to the gesture of pointing with the index finger F.

In the fourth example, information for assisting in selection of a candidate point is projected and displayed near the candidate point. For example, a numeral such as "1" is projected and displayed on the same surface as the object 71 on which the candidate point PN is projected and displayed near the candidate point PN, as illustrated in Fig. 21. In addition, a numeral such as "2" is projected and displayed on the same surface as the object 72 on which the candidate point PO is projected and displayed near the candidate point PO. Further, a numeral such as "3" is projected and displayed on the same surface as the surface of the table 3 on which the candidate point PP is projected and displayed near the candidate point PP.

The user U performs a gesture of indicating a number using a finger of the opposite hand of the hand having the index finger F. Candidate points to be selected are switched according to this gesture. Meanwhile, Fig. 21 illustrates an example in which a gesture indicating "2", specifically, a gesture of raising two fingers, is performed so that the candidate point PO positioned near "2" is selected. The user U may raise one finger when he/she wants to select the candidate point PN and raise three fingers when he/she wants to select the candidate point PP. In the case of this example, it is possible to continuously switch candidate points to be selected or discontinuously switch candidate points to be selected by appropriately changing the number of raised fingers.

Fig. 22 is a diagram for describing a fifth example of a gesture for switching candidate points to be selected. As in the above-described examples, the candidate points PN, PO and PP are detected according to the gesture of pointing with the index finger F.

The fifth example is an example in which candidate points positioned near intersection points of operation directions become candidate points to be selected. The user U performs finger pointing using the index finger F of one hand and finger pointing using the index finger F2 of the other hand. Operation directions FD and FD2 in response to respective finger pointing operations are detected. A candidate point positioned at an intersection point of the operation directions FD and FD2 or a candidate point closest to the intersection point becomes a candidate point to be selected. The user U can switch the candidate point to be selected by changing the direction in which the index finger F2 is directed.

Fig. 23 is a diagram for describing a sixth example of a gesture for switching candidate points to be selected. As in the above-described examples, the candidate points PN, PO and PP are detected according to the gesture of pointing with the index finger F.

The sixth example is an example in which candidate points to be selected are switched in response to a visual line direction of the user U. The visual line direction of the user U is detected, for example, by the human recognition unit 202 and information representing the detected visual line direction is included in posture information. The selection unit 204 switches candidate points to be selected on the basis of the visual line direction included in the posture information.

As illustrated in Fig. 23, the candidate point PN is present on the side of the detected visual line direction ED1, for example. In this case, the candidate point PN becomes a candidate point to be selected. Then, a case in which the user U changes the posture such that the visual line faces the candidate point PO is conceived. A new visual line direction ED2 is detected according to posture change of the user U. The candidate point PO is present on the side of the detected visual line direction ED2. In this case, the candidate point to be selected is switched from the candidate point PN to the candidate point PO. In this manner, candidate points to be selected may be switched in response to the visual line direction of the user U. As in this example, movement of the eyes for changing the visual line direction is also included as a gesture. In addition, a direction in which the user U pays attention may be identified by detecting a gesture of changing the direction of the head, or the like as well as the visual line direction, and a candidate point positioned in the direction may become a candidate point to be selected.

### [With respect to Determined Point]

### (With respect to Determination of Determined Point)

When a plurality of detected candidate points are present, for example, one of the plurality of detected candidate points is determined as a determined point. For example, in a case where a certain candidate point is being selected, when a gesture different from a gesture of switching the candidate point to be selected is detected, the candidate point to be selected is determined as a determined point. When a certain candidate point is being selected, the candidate point to be selected may be determined as a determined point according to audio input such as "determine that."

A determined point may be determined without a specific input. As in the example illustrated in Fig. 21, in a case where a gesture of indicating a number using one hand is detected, a candidate point to be selected may be designated and the candidate point may be determined as a determined point. In addition, in a case where a certain candidate point has been selected, if a gesture of switching the candidate point to be selected, or the like is not performed for a predetermined period (e.g., about 10 seconds to 30 seconds), the candidate point to be selected may be determined as a determined point.

### (Processing Example when Determined Point has been Determined)

Next, an example of processing performed when a determined point has been determined will be described. Of course, the processing example below is an example and processing that will be performed when a determined point has been determined can be appropriately set according to the use of the information processing device 2, and the like. A configuration for performing processing carried out when a determined point has been determined is appropriately added to the above-described configuration of the information processing device 2.

For example, a predetermined image (which may be a still image or a moving image) is projected and displayed at the position of a determined point. The display method is not limited to projection and the predetermined image may be displayed at the position of the determined point through AR or the like. In addition, it is assumed that a three-dimensional map model is placed on the projection area 3a. Description corresponding to a point determined as a determined point (e.g., description or explanation about the origin) may be reproduced.

Only designation of a specific point or person in a certain space may be performed. For example, when a speaker finger-points, for example, a listener positioned at the back in a press conference or a classroom, there is also a case in which surrounding people cannot understand the listener that the speaker finger-points because listeners are also present in front. If the technology according to the present embodiment is applied, when the speaker performs finger pointing, a candidate point is set for each listener positioned in an operation direction, for example. The speaker determines a determined point among the candidate points and displays the determined point in an emphasized manner, and thus surrounding people can recognize a listener designated by the speaker. Meanwhile, in this use example, candidate points are projected and displayed on the bodies of listeners, for example.

Further, in the present embodiment, candidate points can also be set inside an object on the projection area 3a of the table 3, as described above (refer to Fig. 11). Here, a processing example when a candidate point inside an object is determined as a determined point is described.

As illustrated in Fig. 24, a fish model 75 is placed on the projection area 3a, and in this state, the user U performs finger pointing using an index finger F. Candidate points PQ, PR and PS are detected as candidate points. Here, a case in which the candidate point PR corresponding to the inside of the model 75 is determined as a determined point is assumed. In this case, image data of penetrating the internal state of the model 75 may be generated by the display control unit 205, and processing for projecting and displaying an image based on the image data on the surface of the model 75 may be performed. According to such processing, for example, an image representing the inside of a fish (organs and bones) is projected and displayed on the surface of the model 75, as illustrated in Fig. 25, and thus the user U can ascertain the internal structure of the model 75. The model 75 is not limited to the fish and may be a human body, another animal, a building, or the like. The present disclosure can be applied to education, medical treatment, and the like by performing such transmission display.

### [Processing Flow]

Fig. 26 is a flowchart illustrating a processing flow according to an embodiment. In step ST11, the environment recognition unit 201 and the human recognition unit 202 receive information acquired through the input unit 200. Then, the processing proceeds to steps ST12 and ST13.

In step ST12, the human recognition unit 202 estimates feature points of a human body. The human recognition unit 202 generates posture information based on the feature points of the human body and outputs the posture information to the candidate point detection unit 203 and the selection unit 204. Then, the processing proceeds to step ST14.

Meanwhile, in step ST13, the environment recognition unit 201 recognizes a three-dimensional structure on the table 3, more specifically, on the projection area 3a and generates three-dimensional structure information. The environment recognition unit 201 outputs the generated three-dimensional structure information to the candidate point detection unit 203. Then, the processing proceeds to step ST14.

In step ST14, the candidate point detection unit 203 performs candidate point detection processing for detecting an operation direction and detecting candidate points present in the operation direction. Then, the processing proceeds to step ST15.

In step ST15, for example, the candidate point detection unit 203 determines whether candidate points have been detected. Here, in a case where no candidate point is detected, such as a case where finger pointing is not performed, the processing returns to step ST11.

When candidate points have been detected in determination processing of step ST15, the display control unit 205 performs control for projection display of the detected candidate points. Then, the detected candidate points are presented to the user U through the output unit 206. Then, the processing proceeds to step ST16.

In step ST16, it is determined whether a specific gesture of the user U has been detected. This determination processing is performed, for example, by the selection unit 204 on the basis of the posture information. Here, the specific gesture is a gesture for switching candidate points to be selected. When the specific gesture has been performed, the processing proceeds to step ST17.

In step ST17, the selection unit 204 switches candidate points to be selected according to the detected specific gesture. Then, the selection unit 204 outputs selection information representing a candidate point to be selected to the display control unit 205. Then, the processing proceeds to step ST18.

In step ST18, display control processing is performed by the display control unit 205. For example, the display control unit 205 performs control such that the candidate point to be selected is emphasized as compared to other candidate points on the basis of the selection information. According to such control, the candidate point to be selected is emphasized and presented to the user U through the output unit 206. Then, the processing proceeds to step ST19.

In step ST19, the selection unit 204 detects whether a determination input (e.g., a gesture) for determining the candidate point to be selected as a determined point is performed. Here, when the determination input is performed, processing in response to an application is performed at a point near the determined point and the processing ends. When the determination input is not performed, the processing returns to step ST16.

When the specific gesture of the user U is not detected in the determination processing of step ST16, the processing proceeds to step ST20. In step ST20, the selection unit 204 determines whether a previous frame of an image includes the candidate point to be selected. Here, when the previous frame includes the candidate point to be selected, the processing proceeds to step ST21.

In step ST21, since the previous frame includes the candidate point to be selected although the specific gesture is not performed, it is conceived that the specific gesture has been performed and a certain candidate point has been selected previously (e.g., about tens of frames ago). Accordingly, the selection unit 204 does not switch the candidate point to be selected in the previous frame, in other words, generates selection information for maintaining the candidate point to be selected and outputs the generated selection information to the display control unit 205 in step ST21. Then, the processing proceeds to step ST18. In step ST18, the display control unit 205 performs display control processing for projection display such that the candidate point to be selected is not switched, that is, a state in which the predetermined candidate point is currently presented as the candidate point to be selected is maintained. Then, the processing proceeds to step ST19 and processing of step ST19 and subsequent processing are performed. Since the processing of step ST19 and subsequent processing have already been described, redundant description is omitted.

When the previous frame does not include the candidate point to be selected in the determination processing of step ST20, the processing proceeds to step ST22. Since this case is a first stage (initial stage) in which the detected candidate point is presented to the user U, for example, a candidate point closest to the user U from among a plurality of candidate points becomes the candidate point to be selected. Then, the processing proceeds to step ST18 in which the display control unit 205 performs display control processing for projection display such that the candidate point closest to the user U from among the plurality of candidate points becomes the candidate point to be selected. Then, the processing proceeds to step ST19 and the processing of step ST19 and subsequent processing are performed. Since the processing of step ST19 and subsequent processing have already been described, redundant description is omitted.

Meanwhile, a candidate point to be selected presented to the user U from among the plurality of candidate points in the initial stage can be appropriately changed. In addition, a candidate point to be selected may not be presented to the user U in the initial stage. Further, even when the previous frame includes the candidate point to be selected, selection of the candidate point may be canceled when a large action of the user U is detected.

### <Modified Examples>

Although the embodiments of the present disclosure are specifically described above, the content of the present disclosure is not limited to the above-described embodiment, and various modifications are possible based on the technical idea of the present disclosure. Hereinafter, modified examples will be described.

### [Modified Example with respect to Operation Direction]

Although the direction extending from the index finger F for finger pointing in a straight line is defined as an operation direction FD in the above-described embodiment, the present disclosure is not limited thereto. The operation direction FD may be a curved line, a line corresponding to a combination of a straight line and a curved line, or the like.

The candidate point detection unit 203 may detect an operation direction FD according to a gesture of the user U. Fig. 27A and Fig. 27B are diagrams for describing an example of detecting an operation direction FD according to a gesture of the user U. Fig. 27A is a bird's-eye view viewed from above the projection area 3a and Fig. 27B is a side view of the projection area 3a viewed from the side of the table 3. As illustrated in Fig. 27A, an example in which a cylindrical object 81, a square columnar object 82 and a triangular columnar object 83 are placed on the projection area 3a is assumed.

As illustrated in Fig. 27B, in the case of finger pointing with an index finger F approximately parallel to the back of the hand, an operation direction FD10 is detected and intersection points of the operation direction FD10 and the surfaces of the objects are detected as candidate points. For example, it is assumed that candidate points PT, PU, PV, PW and PX are detected as candidate points, as illustrated in Fig. 27A. In contrast, when the fingertip of the index finger F is slightly moved upward, a parabolic operation direction FD11 is detected, as illustrated in Fig. 27B. In addition, intersection points of the operation direction FD11 and the surfaces of the objects 82 and 83 are detected as candidate points. In this manner, an operation direction may be a parabolic trajectory. In addition, the user U can set an operation direction by appropriately changing the direction of the index finger F and prevent detection of candidate points at unintended places (candidate points positioned on the surface of the object 81 in the example illustrated in Fig. 27) in advance.

Fig. 28 is a diagram for describing another example of detecting an operation direction FD according to a gesture of the user U. For example, an operation direction FD extending from the index finger F is detected as a parabolic trajectory. The curvature of this parabolic trajectory varies according to an angle θ3 formed by the index finger F and the thumb F1. For example, the curvature increases as the angle θ3 increases, as illustrated in Fig. 28. The user U can prevent, for example, a candidate point with respect to an object positioned on the near side from being detected by the user U by appropriately changing the angle θ3.

The operation direction FD may be reflected by an object such as a wall. Fig. 29 is a diagram for describing an example in which an operation direction FD is reflected by an object such as a wall. As illustrated in the bird's-eye view of Fig. 29, for example, a state in which a wall 90 is disposed on a side of the table 3 and a cylindrical object 91, a square columnar object 92 and a triangular columnar object 93 are placed on the projection area 3a is assumed.

The position of the wall 90 is recognized by the environment recognition unit 201. For example, the user U performs finger pointing toward the wall 90 using the index finger F and an operation direction FD according to finger pointing is detected. The operation direction FD intersects the surface of the wall 90 that is not an object on the table 3. In such a case, the candidate point detection unit 203 sets the operation direction FD such that it is reflected at the wall 90 and detects candidate points positioned in the reflected operation direction FD (e.g., intersection points of the reflected operation direction FD and the surfaces of the objects 92 and 93). In this manner, the user can reflect the operation direction FD and prevent a candidate point with respect to an object positioned on the near side (e.g., the object 91) from being detected by the user U.

### [Other Modified Examples]

In the above-described embodiment, the fact that presence of a candidate point at a place to be hidden and thus invisible from the user U can be presented to the user U has been described (refer to Fig. 9). In this case, even when the candidate point present at the hidden and invisible position has been projected and displayed on the surface of an object on the near side, it may be difficult for the user U to image the presence or specific position of the candidate point. Accordingly, projection display for informing the presence or position of a candidate point invisible to the user U may be performed on a place visible to the user U. For example, as illustrated in Fig. 30, arrows 95B to 95E indicating positions respectively corresponding to candidate points PB to PE present at positions invisible to the user U are projected and displayed at positions that are lateral directions of the positions of the candidate points PB to PE and are visible to the user U.

In addition, information representing the positions of detected candidate points (e.g., map information having a relatively small size in which the positions of the candidate points are mapped to objects on the projection area 3a) may be projected and displayed near the user U. The user U can ascertain the positions of the candidate points by viewing such information and refer to the positions when selecting a candidate point. Such information may be displayed on an electronic device such as a smartphone carried by the user U or may be projected and displayed on a ceiling.

Although the user U described in the above-described embodiment is assumed as a person in general, it may be a robot. An object on which projection display is performed in the above-described embodiment may be any of resin products, pottery, optical transparent members such as glass, the air, and the like. In addition, the size of the projection area may be appropriately changed, and an appropriate number of information processing devices may be used in response to the size of the projection area, or the like. The projection area is not limited to the surface of the table and may be a floor and the like. Furthermore, the operation direction may be detected on the basis of an action of pointing with a pen or the like instead of finger pointing.

The present disclosure can also be realized by a device, a method, a program, a system, and the like. For example, a program that executes the functions described in the above-described embodiment is caused to be downloadable, and a device that does not have the functions described in the embodiment can perform control described in the embodiment in the device by downloading and installing the program. The present disclosure can also be realized by a server that distributes such a program. In addition, technical features in the embodiment and features described in the modified examples can be appropriately combined.

The present disclosure may also be configured as follows.
(1) An information processing device including a controller configured to detect at least two candidate points positioned in a detected operation direction, switches the candidate points such that a predetermined candidate point is selected from the at least two candidate points, and to display at least the selected candidate point.
(2) The information processing device according to (1), wherein the candidate points include at least one point that cannot be indicated at an operation position of a user.
(3) The information processing device according to (2), wherein the point is on a back side of a shielding object positioned in the operation direction.
(4) The information processing device according to (2), wherein the point is inside of a shielding object positioned in the operation direction.
(5) The information processing device according to any one of (1) to (4), wherein the controller is configured to display the candidate points according to projection display on a predetermined object positioned in the operation direction.
(6) The information processing device according to (5), wherein the controller is configured to project and to display information indicating positions of the detected candidate point near a user.
(7) The information processing device according to any one of (1) to (6), wherein the controller is configured to project and to display, on a surface of an object positioned in the operation direction on the side of the user, a candidate point present in at least one of the inside of the object and the back side of the object.
(8) The information processing device according to any one of (1) to (7), wherein the controller is configured to emphasize and to display the selected candidate point.
(9) The information processing device according to any one of (1) to (8), wherein the controller is configured to detect intersection points of the operation direction and surfaces of objects positioned in the operation direction as the candidate points.
(10) The information processing device according to any one of (1) to (9), wherein settings with respect to the candidate points are possible.
(11) The information processing device according to (10), wherein settings with respect to the candidate points are settings with respect to an area in which the candidate points are detected.
(12) The information processing device according to any one of (1) to (11), wherein the controller is configured to switch the candidate points according to a detected gesture.
(13) The information processing device according to (12), wherein the operation direction is detected on the basis of finger pointing of a user and the gesture is a gesture using a finger of the user.
(14) The information processing device according to any one of (1) to (13), wherein the controller continuously switches the candidate points.
(15) The information processing device according to any one of (1) to (13), wherein the controller is configured to discontinuously switch the candidate points.
(16) The information processing device according to any one of (1) to (15), wherein the controller is configured to set the operation direction according to a gesture of a user.
(17) The information processing device according to (4), wherein, when a candidate point corresponding to the inside of the shielding object is determined as a determined point, an internal structure of the shielding object is projected and displayed on the shielding object.
(18) An information processing method, by a controller, including detecting at least two candidate points positioned in a detected operation direction, switching the candidate points such that a predetermined candidate point is selected from the at least two candidate points, and displaying at least the selected candidate point.
(19) A program causing a computer to execute an information processing method, by a controller, including detecting at least two candidate points positioned in a detected operation direction, switching the candidate points such that a predetermined candidate point is selected from the at least two candidate points, and displaying at least the selected candidate point.

### [Reference Signs List]

1 Projection mapping system
2 Information processing device
3 Table
201 Environment recognition unit
202 Human recognition unit
203 Candidate point detection unit
204 Selection unit
205 Display control unit
206 Output unit
F Index finger
FD Operation direction
FD, PA to PX Candidate points

## Claims

1. An information processing device comprising a controller configured to detect at least two candidate points positioned in a detected operation direction, switches the candidate points such that a predetermined candidate point is selected from the at least two candidate points, and to display at least the selected candidate point.

2. The information processing device according to claim 1, wherein the candidate points include at least one point that cannot be indicated at an operation position of a user.

3. The information processing device according to claim 2, wherein the point is on a back side of a shielding object positioned in the operation direction.

4. The information processing device according to claim 2, wherein the point is inside of a shielding object positioned in the operation direction.

5. The information processing device according to claim 1, wherein the controller is configured to display the candidate points according to projection display on a predetermined object positioned in the operation direction.

6. The information processing device according to claim 5, wherein the controller is configured to project and to display information indicating positions of the detected candidate point near a user.

7. The information processing device according to claim 1, wherein the controller is configured to project and to display, on a surface of an object positioned in the operation direction on the side of the user, a candidate point present in at least one of the inside of the object and the back side of the object.

8. The information processing device according to claim 1, wherein the controller is configured to emphasize and to display the selected candidate point.

9. The information processing device according to claim 1, wherein the controller is configured to detect intersection points of the operation direction and surfaces of objects positioned in the operation direction as the candidate points.

10. The information processing device according to claim 1, wherein settings with respect to the candidate points are possible.

11. The information processing device according to claim 10, wherein settings with respect to the candidate points are settings with respect to an area in which the candidate points are detected.

12. The information processing device according to claim 1, wherein the controller configured to switch the candidate points according to a detected gesture.

13. The information processing device according to claim 12, wherein the operation direction is detected on the basis of finger pointing of a user and the gesture is a gesture using a finger of the user.

14. The information processing device according to claim 1, wherein the controller continuously switches the candidate points.

15. The information processing device according to claim 1, wherein the controller is configured to discontinuously switch the candidate points.

16. The information processing device according to claim 1, wherein the controller is configured to set the operation direction according to a gesture of a user.

17. The information processing device according to claim 4, wherein, when a candidate point corresponding to the inside of the shielding object is determined as a determined point, an internal structure of the shielding object is projected and displayed on the shielding object.

18. An formation processing method, by a controller, comprising detecting at least two candidate points positioned in a detected operation direction, switching the candidate points such that a predetermined candidate point is selected from the at least two candidate points, and displaying at least the selected candidate point.

19. A program causing a computer to execute an information processing method, by a controller, comprising detecting at least two candidate points positioned in a detected operation direction, switching the candidate points such that a predetermined candidate point is selected from the at least two candidate points, and displaying at least the selected candidate point.
